# EUROPEAN PATENT APPLICATION

(11) **EP 2 518 617 A1**
(43) Date of publication of application: **31.10.2012**
(21) Application number: 11163949.8
(22) Date of filing: 27.04.2011
(51) Int. Cl.: G06F 9/44

(54) **Dynamic user and device specific user interface generation based on process descriptions**

(71) Applicant: Tieto Oyj, 00441 Helsinki (FI)
(72) Inventor: Müller, Axel J., 41468, Neuss (DE); Heikkinen, Sami, 90420, Oulu (FI)
(74) Representative: Kitzler, Michael

(57) **Abstract**

The present invention relates to methods, computer program products and systems for generating a user interface on a user terminal device in a system comprising a central server and a plurality of user terminal devices communicatively coupled by means of a data communications network.

A plurality of process descriptions comprising process related parameters are accessible via the central server and at least one selectable process description associated with a specific user is displayed on the user interface. The user interface generation is performed by means of interface generation logic that dynamically organizes selected user interface components to be displayed dependent on user terminal device property parameters, parameters of the user interface components to be displayed and predetermined layout organization rules comprised in the interface generation logic. The user interface logic is implemented in the user terminal device.

## Description

### TECHNICAL FIELD

The present invention relates in general to the technical field of generating user interfaces on a display of a user terminal in a computerized system. More specifically, the present invention relates to a computerized system for dynamic generation of user interfaces dependent on a current process workflow defined in a computerized support system for a process oriented organization.

### BACKGROUND

Computerized support systems are increasingly used in process oriented organizations, for example to collect and communicate relevant information to users via user terminals to support process activities and actions according to a specified workflow. Typically, activities or actions are modeled in cross-functional descriptions, for example based on time and function information or on time and user information. An example of such a process oriented organization is a health care or a medical organization with users being health care workers meeting different clients and having need for different information in different situations.

In a health care environment, for example a hospital, clinical laboratories, ambulatory settings, home health care and other health care facilities, there are often hundreds of health care workers, all with different activities on their schedule. Consequently there are hundreds of different workflows that need to be communicated to the different health care workers, or in some scenarios even to the patients, hereinafter also collectively referred to as users of the system.

A common way of communicating workflows to users is to display workflow information in one or more standardized interfaces. Often, information is retrieved from different subsystems that for example may be specific for different health care departments. Efforts are made to place all information on a common information platform and provide interfaces to enter or access the information.

iMedOne currently described on the webpages www.tieto.com and
www.ehealthnews.eu/tieto is an application in the form of an information platform developed by Tieto, used for collecting and displaying information in a health care environment. For example, the application allows data collected at a patient's bedside to be entered immediately into a database based system, from where it can be accessed directly by the users of the system. Since the system is built on a database there is no redundancy in the stored information and all patient documentation, from medical and nursing histories, examination documentation to admission information and discharges, is stored in one place. The iMedOne application also supports workflow by enabling embedded cross-functional process descriptions including items such as activity, time for the activity and function or work-role of a user performing the activity.

The information that is needed by and communicated to the users typically differs dependent on current activities and dependent on the work-role of the user. It has been found that organizational inefficiency occurs when having a standard interface displayed on user terminals since different information is needed by different users in order for the users to be able to perform their specific tasks. Furthermore, typically different users have user terminals with different device specifications, for example users may have stationary work stations and/or be equipped with handheld terminals.

Instead of having a standard interface, it is conceivable to manually design either:
- a limited number of standard user interfaces to be used in several situations for which they are not perfectly adapted, giving less user friendly user interfaces wherein the information is not presented to the user in an optimized way with regard to relevant information and the capabilities of the user terminal devices; or
- a large number of specialized user interfaces giving very costly system design and system maintenance with regard to need for new user interfaces, especially considering different types of user terminal devices having different properties and capabilities.

Thus, standardized interfaces will not be optimized to different users and different user terminals, and the design of a plurality of specialized user interfaces is expensive.

Another aspect affecting the organizational efficiency is the technical capacity with regard to data transmission rate and processing rate within the computerized support system when the system must handle communication with a large number of user terminal devices.

### RELATED ART

Examples of related art are for example found in the following publications:
The patent document US2007/0150820 A1 shows a system for generating a data-driven user interface. The system comprises a network interface configured to communicate with a user terminal device, a processor coupled to the network interface, and a memory coupled to the processor. The memory contains a product model, user-interface logic, and metadata. User interface specific metadata drives the user-interface logic to generate a dynamic user interface. The user-interface metadata refers to and is bound to the product model and comprises various abstractions including an item, set, frame and flow. A flow is responsive to one or more rules and defines a transition from a first frame to a subsequent frame.

Patent family members EP1628211 A2 and US2006/0015383 A1 show a computer implemented method that provides a user interface for running a plurality of business processes. In said processes process data are handled in data objects by one or more service oriented business applications run on a computer. According to the invention the method comprises providing a generalized information architecture for presenting modeled business situations, including work-roles, process instances, and business object instances for handing said data objects active in said plurality of business processes; providing an interface generator for directly generating a user interface from the generalized information architecture; and providing said user interface by said interface generator while identifying a particular instantiated business situation as a business context to which said user interface provides said interface.

The patent publication US20050172235 A1 shows a system and method that is provided to selectively exclude elements from a user interface window depending upon the type of device upon which the interface is being displayed. A designer (or a user) decides which elements in a window should be excluded when operating a certain type of device. It is likely that some user interface elements will not be deemed critical enough to provide when the user is using a constrained device, such as mobile telephones and personal digital assistants (PDAs). An element can be an image, an audio file, a table, a column in a table, a page in a property notebook, a wizard (or page in a wizard), or a group of related items. The judgment to exclude an element is based upon the value of the piece of data (element) in comparison to the visual bandwidth (display space) and/or network bandwidth needed to provide the element.

These pieces of prior art are not adapted to a process oriented organization, such as a healthcare organization, having a large number of users simultaneously using the system.

The patent document US2010/0106657 A1 is directed to a system in a health care environment and shows a user interface for use in e.g. a healthcare computing environment, for displaying an item of work in a workflow context associated with a particular resource. In one embodiment, the user interface includes a first workflow context display area configured to display a current workflow state of the item at work, and at least one of a past workflow state and a potential future workflow state of the item at work. The user interface may include a selectable workflow view indicator, allowing a user to navigate from the first workflow context area to a second workflow context area configured to display an identity of at least additional resource associated with the item of work and status of the item of work as it pertains to the additional resource. Patent document US2010/0106657 A1 discloses the appearance of the generated interface and focuses on a wide selectivity of what items to display on the interface. It does not provide any details on how the disclosed interface is generated.

### OBJECT OF THE INVENTION

The general object of the invention is to adapt a computerized support system for a process oriented organization in order to achieve improved organizational efficiency.

A more specific object and a problem to solve are to adapt the computerized support system to optimize the generation of user interfaces with regard to: the number of users, the specific needs of the users of the system and the specific user terminal devices.

The following problem aspects are addressed by the invention:
1. Enabling process specific generation of a user interface.
2. Optimizing the generation of user interfaces to users of the system.
3. Optimizing the generation of user interfaces to user terminal devices of the system.
4. Enabling scalability of the computerized support system with respect to the number of users.
5. Adapting, in an economically efficient manner, a computerized support system based on standardized user terminals to enable the use of varying user terminals such as mobile terminals.

### SUMMARY OF THE INVENTION

Exemplary embodiments of the present invention relates to methods, computer program products and systems for dynamic user and device specific user interface (hereinafter also referred to as UI) generation based on process descriptions, according to the appended claims.

According to an exemplary embodiment, there is provided a method for generating a user interface on a user terminal device (108) in a computerized support system (102) for supporting a process oriented health care organization, wherein:
a. the computerized support system (102) comprises a central server (104) and a plurality of user terminal devices (108) communicatively coupled by means of a data communications network (106);
b. a plurality of process descriptions comprising process related parameters are accessible via the central server (104);
c. at least one selectable process description associated with a specific user is displayed on the user interface;
d. characterized in the steps of:
e. storing a local copy of a selected set of process descriptions in the user terminal device (108);
f. generating, by means of interface generation logic implemented in the user terminal device, a user interface for displaying the selected set of process descriptions in at least one user interface component, comprising:
   i. selecting, dependent on the selected process descriptions, the at least one user interface component to be displayed from a repository of user terminal specific user interface components stored in the user terminal device;
   ii. dynamically organizing the user interface components to be displayed dependent on user terminal device property parameters, parameters of the user interface components to be displayed and predetermined layout organization rules comprised in the interface generation logic;
g. displaying the generated user interface on a display of the user terminal device.

According to a further exemplary embodiment, the at least one selectable process description associated with a specific user is selected dependent on information comprising a selection of the following:
a. user role information;
b. current time information;
c. current process time; and
d. process id.

According to a further exemplary embodiment, the process descriptions are cross-functional and include items such as one or more activities, time for the one or more activities to be performed and function or work-role of a user performing the activity.

According to a further exemplary embodiment, the user role information is retrieved from a repository of pre-stored user roles in the central memory of the central server in response to an input by a user using input means (124) of a user terminal device.

According to a further exemplary embodiment, the current time information is retrieved through synchronization with an internal clock of the user terminal device.

According to a further exemplary embodiment, the process information is retrieved from a repository of pre-stored process descriptions in the central memory of the central server in response to an input by a user using input means (124) of a user terminal device.

According to a further exemplary embodiment, the process information comprises a new process created by the user.

According to a further exemplary embodiment, a new process is created by creating a new copy of a selected process, storing the process start time and linking the new process to the active domain specific case, in healthcare a patient and his/her medical condition being treated.

According to a further exemplary embodiment, the user interface components are dynamically organized dependent on the size and/or resolution of the display of the user terminal device.

According to a further exemplary embodiment, the organization step further comprises:
a. organizing the selected one or more user interface components on a current screen, the screen having the size of the display of the user terminal device;
b. if the screen is full, and there is still one or more user interface components not yet organized, proceeding onto a next screen, the next screen having the size of the display of the user terminal device; and
c. iterating steps a-b until all user interface components are organized.

According to a further exemplary embodiment, the displaying step comprises displaying the organized user interface components on subsequent screens, if more than one screen is used during the organization step.

According to a further exemplary embodiment, the orientation of the user terminal device is taken into consideration.

According to a further exemplary embodiment, the UI components to be displayed are organization into more than one different layouts that are stored locally, to enable a fast change of layout if the orientation of the user terminal device is changed.

According to a further exemplary embodiment, the size of the user interface components is defined as the height and width and the user interface components, and further wherein the size of the display of the user terminal device is defined as the height and width of the display of user terminal device.

According to another exemplary embodiment, there is provided a computer program product for generating a user interface on a user terminal device (108) in a computerized support system (102) for supporting a process oriented health care organization, the computer program product comprising computer program code portions adapted to control a data processing system to perform the steps of:
a. storing a local copy of a selected set of process descriptions in the user terminal device (108);
b. generating, by means of interface generation logic implemented in the user terminal device, a user interface for displaying the selected set of process descriptions in at least one user interface component, comprising:
   i. selecting, dependent on the selected process descriptions, the at least one user interface component to be displayed from a repository of user terminal specific user interface components stored in the user terminal device;
   ii. dynamically organizing the user interface components to be displayed dependent on user terminal device property parameters and predetermined layout organization rules comprised in the interface generation logic;
c. displaying the generated user interface on a display of the user terminal device.

According to a further exemplary embodiment, the computer program product further comprises computer program code portions adapted to control a data processing system to perform the steps of any of claims 2-14.

According to another exemplary embodiment, there is provided a system for generating a user interface on a user terminal device (108) in a computerized support system (102) for supporting a process oriented health care organization, the system comprising:
a. a central server (104);
b. a plurality of user terminal devices (108), each user terminal device comprising output functionality (126) in the form of a user terminal display;
c. a data communications network (106) communicatively coupling the central server (104) and the plurality of user terminal devices (108);
d. a repository of process descriptions comprising process related parameters, the repository of process descriptions being made available via the central server (104);
e. selection means for selecting at least one process description from the repository of process descriptions, wherein the at least one process description is associated with a user role;
characterized in that the user terminal further comprises:
f. storage means adapted to store a local copy of a selected set of at least one process description, stored in a local memory (118) of the user terminal device (108);
g. a repository of user terminal specific user interface components, stored in the local memory (118) of the user terminal device (108);
h. interface generation means for generating a user interface that displays the selected set of process descriptions in at least one user interface component, the interface generation means comprising:
   i. selection means for selecting, dependent on the selected process descriptions, the at least one user interface component to be displayed from the repository of user terminal specific user interface components;
   ii. organizing means for dynamically organizing the user interface components to be displayed, dependent on user terminal device property parameters and predetermined layout organization rules;
i. displaying means for displaying the generated user interface on the display of the user terminal device.

According to a further exemplary embodiment, the system further comprises means adapted for realizing the steps of any of claims 2-14.

### BRIEF DESCRIPTION OF THE DRAWINGS

The invention will now be described in more detail with reference to the appended drawings, wherein:
Fig. 1 shows an exemplary embodiment of a computerized system for dynamic generation of user interfaces.
Fig. 2 shows a more detailed view of a user interface (UI) generator 122 of a user terminal device 108, first presented in Fig. 1.
Fig. 3A shows a more detailed view of the central memory 110.
Fig. 3B shows a more detailed view of a local memory 118.
Fig. 4 shows log-in information.
Fig. 5 shows a device specific component list.
Fig. 6 shows a list of active processes.
Fig. 7A is a block diagram that shows filtering of processes.
Fig. 7B is a block diagram that shows creation of a new process.
Fig. 8 is a block diagram that shows filtering of process descriptions.
Fig. 9A is a block diagram that shows filtering of user interface components.
Fig. 9B is a block diagram that shows organization of components to be displayed.
Fig. 10 is a block diagram that shows en exemplary embodiment of the present invention.
Fig. 11 shows a user interface layout according to an exemplary embodiment.
Fig. 12 shows a generalized user interface layout according to an exemplary embodiment.

### DETAILED DESCRIPTION OF EMBODIMENTS OF THE INVENTION

### Introduction

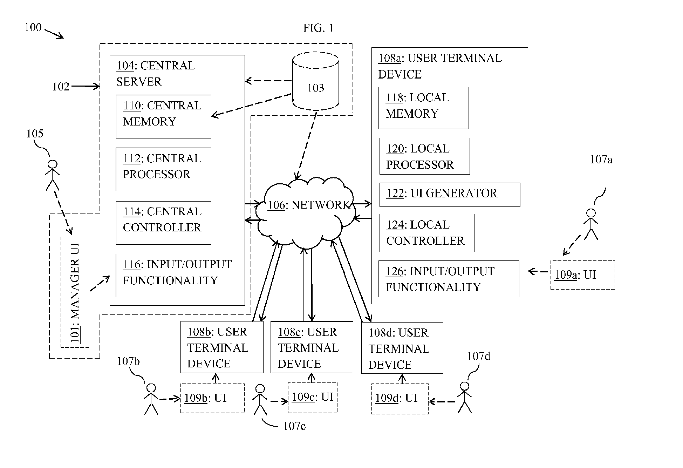

The invention is applied in a computerized support system devised for managing information and supporting workflow in a process oriented organization, here exemplified in a health care organization. The health care organization typically has a large number of employees working to implement treatment schemes on a large number of patients. An overview of such a computerized support system 100 is shown in Fig. 1. Information relating to the patients as well as treatment plans and human physical health care resources is gathered in a database based health information management system 102 residing in or accessible via a central server 104. The health information management system 102 is maintained by a manager user 105 via a manager user interface 101 operating by means of input/output functionality 116. The manager user interface 101 is communicatively coupled to the central server 104. Health care workers are local users 107 of the computerized support system and communicate with the information management system 102 via user terminal devices 108. The information typically stored in the information management system 102 comprises patent related data such as patient identification data (patient id), medical history, nursing history, examination documentation, admission/discharge information and/or current treatment plans. Further, there is also resource related information such as user identity data (user id), user role, physical resources as well as process related information such as treatment plan templates describing treatment processes, and a register of active processes, planned processes and possibly a register of historical processes.

The computerized support system according to the present invention enables dynamic generation of user interfaces, resulting in user interfaces that are optimized with regard to: the number of users, the specific needs of the users of the system and the specific user terminal devices.

This is achieved by the following solutions to the above stated problem aspects.

According to an exemplary embodiment of the inventive concept, the logic for generating a user interface is implemented locally, in effect in each user terminal device. The logic is preferably implemented in an interface generator that controls a generation of user interfaces that is performed locally, in a dynamic manner based current circumstances. Thereby, even if a large number of users are simultaneously using the system and a separate interface hence needs to be generated for each of the user terminal devices of the users the central server will not be overloaded, since the interface generation is performed in the local user terminal devices. This solves the problem of how to enable scalability of the computerized support system with respect to the number of users. It is evident to a person skilled in the art that the solution of implementing the user interface generation logic locally would work just as well if the system is used by a small number of users, or by a single user. Furthermore, the users will not experience any latency in the user interface generation. This further gives the effect of contributing to the user experiencing the user interface as user-friendly.

This solution also solves the problem aspect of adapting, in an economically efficient manner, a computerized support system based on standardized user terminals to enabling the use of varying user terminals such as mobile terminals. By the set up to perform the user interface generation in a dynamic fashion, there is an automation of the generation of a dynamic user interfaces which increases efficiency and decreases cost.

During the generation of a user interface, the user role of the user is taken into consideration and only information relevant to a specific user is shown in the interface generated on the user terminal device of said user. This solves the problem of how to optimize the generation of user interfaces to users of the system.

Further, during the generation of a user interface, a list of user terminal device specific user interface components (hereinafter also referred to as UI components) is used. Also the size and/or resolution of the display of the user terminal device is taken into consideration in the generation process, by the interface generation logic being adapted to organize IU components to be displayed in accordance with the display size and/or display resolution. This solves the problem of how to optimize the generation of user interfaces to user terminal devices of the system.

Further, during the generation of a user interface the user selects or creates a process and information on said selected or created process is taken into consideration along with the time when the process was selected and/or created. Thereby, only information relating to a specific process, and relating to the current time, is shown in the interface generated on the user terminal device of said user. This solves the problem of how to enable process specific generation of a user interface. Since only relevant information is presented to the user, this further gives the effect of contributing to the user experiencing the user interface as user-friendly.

Details relating to the solution according to the present invention are described further below.

### Process, process template, process instance and process description

The present invention relates to process oriented organizations. A process according to the present application may be a complete process, a sub-process or a phase of a process.

For example, if the process oriented organization is a health care organization, there may be an operation planned for a specific patient who has a broken leg. In this case, all planned activities related to the operation, such as for example X-ray, diagnostics, preparations for operation, operation, and control visit later, would be included in a broken leg operation process. According to the present application, the term process may also be used to describe a sub-process, for example the preparation for operation. Furthermore, a phase of a process, for example a pre-operation phase including diagnostics and preparations for operation, may also be referred to as a process in the present application.

A process, hereinafter also referred to as a process instance, is based on a process template. A process template comprises a specified set or sequence of process steps/process activities describing a standard operating procedure, for example X-ray, operation and post-operation activities relating to the treatment of a patient with a broken leg. When a new process is created it means that an instance of the relevant process template is created, where after case specific information is added to the template instance to create a case specific process instance. A template is independent of the template instances and process instances based on the template, and also of any case specific information related to the process instances. The creation of process instances and updating of process templates is described in further detail below, in connection with the figures.

Process related information is stored as process descriptions. A process description according to the present invention may comprise information such as process id, patient id of the patient related to the process, activities to be performed, current time information, time for the activities to be performed, and the user role of the person responsible for performing each activity. According to an exemplary embodiment, the process descriptions are cross-functional and include items such as one or more activities, time for the one or more activities to be performed and function or work-role of a user performing the activity.

### System and information architecture

Fig. 1 is a schematic diagram illustrating an exemplary embodiment of a computerized system 100 for dynamic generation of user interfaces. The system 100 comprises a central server 104 and several user terminal devices 108 communicatively coupled to the central server by means of a data communications network 106.

The central server 104 comprises a central memory 110, a central processor 112, a central controller 114 and input/output functionality 116.

As indicated in Fig. 1, the communication between the central server and the user terminal devices is a two-way communication, and user terminal devices 108 typically communicate with the central server 104 by sending a request and receiving a response. As is commonly known in the art of networking, a request may be transported from a user terminal device 108 across the data communications network 106 to the central server 104 where the request is received, processed in the central processor 112 and a response is generated and transmitted back to the respective user device that initiated the request.

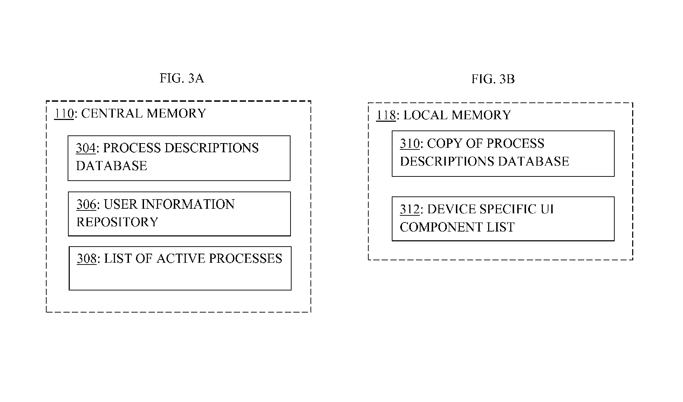

The central memory 110 is described in further detail in connection with Fig. 3A. According to Fig. 3A, the central memory 110 comprises a process descriptions database 304, a user information repository 306 and a list of active processes 308.

The process descriptions database 304 comprises process descriptions, related to processes in a process oriented organization.

The user information repository 306 comprises information on the roles of the users of the system, and it may also hold information on the authorities of the different users/user roles. User rights control, such as control of whether a user is authorized to retrieve a certain piece of requested information, and personalization is performed by the central controller 114. In this way, a user requesting information related to a specific process or sub-process only receives the information that is relevant to his/her user role, and the user is further not able to retrieve process information that he/she is not authorized to see.

The central controller 114 further maintains version history of process templates, which are stored centrally, i.e. in the central memory 110. In an exemplary embodiment a user creates a process instance, for example treatment of a broken leg of a specific patient. The process instance is created based on a process template, in this case a "treatment of broken leg" template. If the process template is later updated during the time when a user selected or user created process instance is still active, the definition of the active process instance is not updated. However, an active process instance may be modified manually, to fit the conditions of the patient to which it relates, for example by a user inputting case specific information using input means of a local user terminal device. Any processes created by users after the relevant process template has been updated will follow the new, updated, definition template.

Each time a user selects the option of creating a new process, it is checked whether there has been an update of the relevant process template, in order to guarantee that only up to date process templates are used for creating new process instances. In exemplary embodiments of the present invention, a copy of a previously used process template, or a copy of all available process templates, may also be stored locally on a user terminal device, in order to enable fast retrieval. In said exemplary embodiments, it is important to check the validity of the templates, i.e. if they are up to date, before new processes are created based on the templates. A status indicator for example in the form of a flag is provided in the server to indicate that a process template has been updated. So for example, the flag may be set to valid for an updated template version or invalid if there exists a later version of the template.

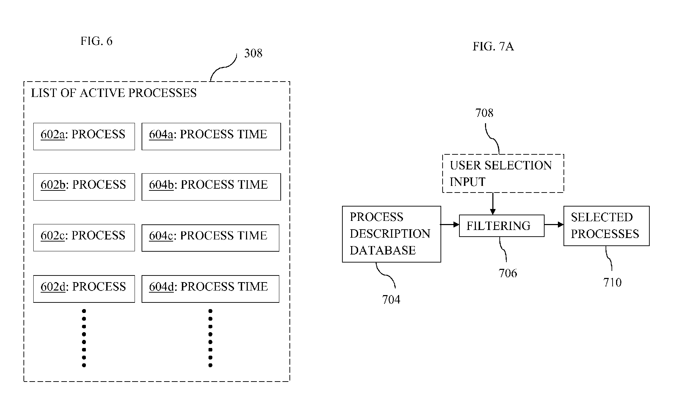

In the exemplary embodiment where a copy of all process templates are locally stored on a user terminal device the local copies are checked for validity and, if necessary, updated each time a user logs into the device. According to another exemplary embodiment, the local copies are updated at specified time intervals. According to yet another exemplary embodiment, the user is notified each time any of the process templates has been updated, and the user may be prompted to make an active selection to update the local copies, i.e. pull the information, or the update follows automatically, through pushing of the information. According to another exemplary embodiment, the local copies are automatically updated, through pushing of information, without a notification being sent to the user of the device. The list of active processes 308 is shown in more detail in Fig. 6. According to Fig. 6, the list of active processes 308 comprises process instances that are currently active 602 and for each of said currently active process instances a process time 604, in the form of a time stamp, representing the time instance when the process instance was created. The process time 604 is hereinafter also referred to as process start time.

For example:
At time instance t1, a process template A1 is created. At time instance t2, occurring after time instance t1, a process instance P1 is created based on the template A1. Process instance P1 is now an active process instance and hence stored in the list of active processes 308 together with a timestamp 604 representing the process start time, t2. At time instance t3, occurring after time instance t2, the process definition template is centrally updated to version A2. The central updating of the template does not lead to any changes of active process instance P1. At time instance t4, occurring after time instance t3, a new process instance P2 is created. The process instance P2 is based on the updated template A2.

Returning to Fig. 1, the central server 104 is in one embodiment realized as a part of a functional database based health information management system 102, the system 102 further comprising database information from at least one database 103 alternatively stored in the central memory 110 or accessible to the central server 104 through communicative coupling, possibly via a communications network 106. The database may be stored in one physical location, but may also be a cluster of communicatively coupled databases or a distributed database. The health information management system further comprises a manager user interface 101, allowing a manager user 105 of the health information management system to initialize and maintain the system using means of input/output functionality 116. Referring again to Fig. 3A, during an initialization phase the information in the process description database 304 and user information repository 306 is input by a manager user 105, using an input means in connection with a manager user interface 101, displayed on a display of a device communicatively coupled to the central server 104. The input means may be for example a keyset, a touch screen, a touch pad, buttons, a joy stick, a computer mouse, a remote control, voice control or any other suitable input means. The process description database 304 and user information repository 306 may be updated at a later time, for example to include new processes, new activities or new users or user roles. Updating/maintenance of the system may as previously mentioned be performed by a manager user 105, using input means in connection with the manager user interface 101.

Local users 107 of the computerized support system 100, in exemplary embodiment health care workers in a health care organization, communicate with the information management system 102 via user interfaces 109 of user terminal devices 108.

The user terminal devices 108 may comprise a range of devices, such as workstations, portable computing devices or handheld terminals, for instance personal digital assistants (PDA), mobile telephones, tablets and the like. Each user terminal device 108 comprises a local memory 118, a local processor 120, a local controller 124 and input/output functionality 126. The input functionality may for example be enabled through input means such as a keyset, a touch screen, a touch pad, buttons, a joy stick, a computer mouse, a remote control, voice control or any other suitable input means. The output functionality is enabled through output means, typically a display for presenting a graphical user interface to an operator/a user of the user terminal device. In addition to having a display, each of the user terminal devices includes one or more input/output means that permit an operator of the device to modify data on a graphical user interface and to maintain a communication session via the data communications network 106 with the central server 104.

The local memory 118 is described in further detail in connection with Fig. 3B. According to Fig. 3B, the local memory 118 comprises a device specific user interface (UI) component list 312, and may also comprise a local copy of the process description database 304 of the central memory 110, or selected parts of the process description database 304 of the central memory 110, retrieved from the central server 104 at a certain time instance.

According to an exemplary embodiment, the local copies are updated or refreshed each time a user logs into the device. According to another exemplary embodiment, the local copies are updated at specified time intervals. According to yet another exemplary embodiment, the user is notified each time the process description database has been updated, and the user may then be prompted to make an active selection to update the local copies, i.e. pull the information, or the update follows automatically, through pushing of the information from the process description database. According to another exemplary embodiment, the local copies are automatically updated, through pushing of information, without a notification being sent to the user of the device.

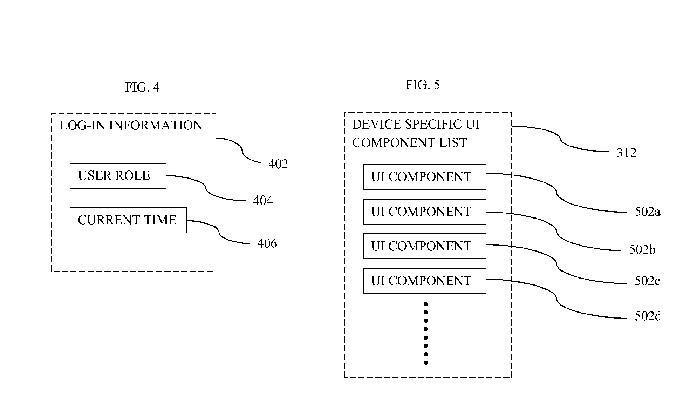

The device specific UI component list 312 is shown in more detail in Fig. 5. According to Fig. 5, the device specific UI component list 312 comprises a number of device specific UI components 502, in other words a number of components that are adapted to display the information they contain on a display of the user terminal device in which they are stored.

In an exemplary embodiment, a UI component may be associated with and adapted to display process descriptions, for example comprising one or more activities related to a process, the user roles of one or more users who are to perform the one or more activities and the time for each activity to be performed.

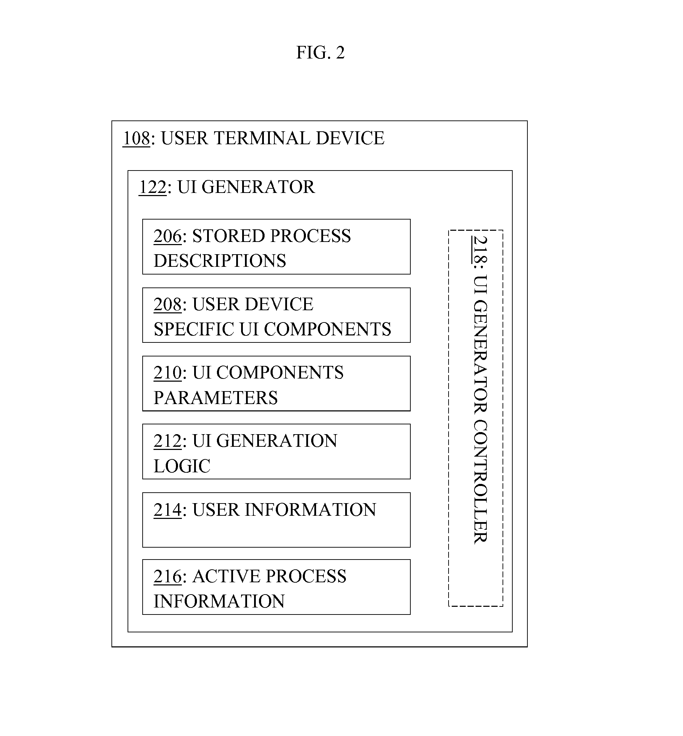

Each user terminal device further comprises a user interface generator 122 implemented thereon. The user interface generator may comprise a source program, an executable program (object code), a script, or any other entity comprising a set of instructions to be performed. The user interface generator is described in further detail in connection with Fig. 2.

### The interface generator

Fig. 2 shows a more detailed view of a user interface generator (hereinafter also referred to as UI generator) 122 implemented on the user terminal devices 108. According to an exemplary embodiment, a UI generator comprises stored process descriptions 206, user device specific UI components 208, UI component parameters 210, UI generation logic 212, user information 214, active process information 216 and a UI generation controller 218.

The stored process descriptions 206 are either stored directly in the UI generator, in a memory unit, or are accessible to the UI generator from the local memory 118 of the user terminal device 108 on which the UI generator is implemented.

### User perspective

This chapter describes the user perspective. Details concerning the retrieval and transfer of information within the system are further explained below in connection with Fig. 4 and Fig. 7A-10.

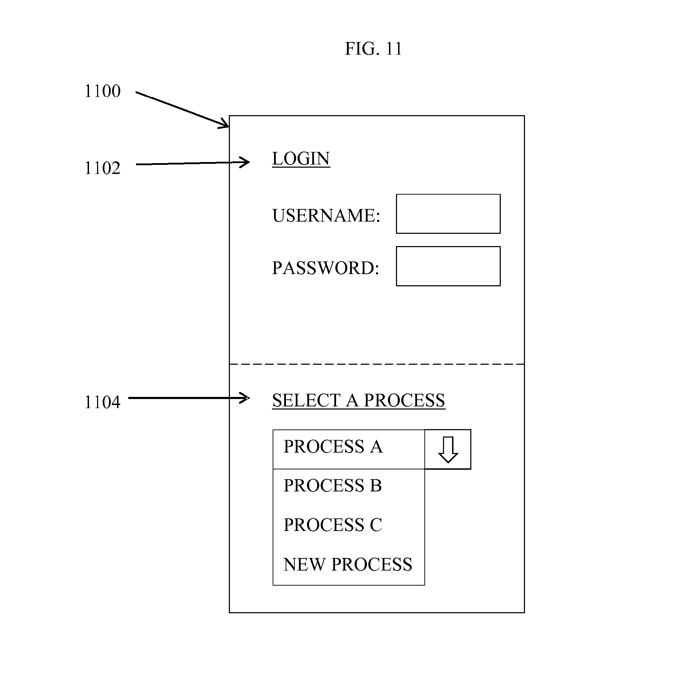

In an exemplary embodiment of the present invention, a user who is a physician wants to see a schedule of the activities to be performed in relation to a patient who has a knee fracture. The user starts by logging into a user terminal device 108 using input means of the user terminal device. The interface for performing login may for example look like the top half of the interface 1102 shown in Fig. 11, prompting input of a username and a password. After the user has input the required information, log-in information 402 is retrieved by the system in relation to the input information. The retrieved log-in information 402, as shown in Fig. 4, may comprise a definition of a user role 404 and a current time 406 that may be saved locally as a time stamp representing the time that the user logged into the system.

In an exemplary embodiment, the user is then requested to select a process from a list of processes displayed in the user interface of the user terminal device, wherein the selectable processes may be displayed as a drop-down menu according to the interface 1104 shown in Fig. 11. One of the selectable options may be to create a new process.

When a new process is created it means that an instance of a relevant process template is created, where after case specific information is added to the template instance to create a case specific process instance. For instance, if a user selects or creates a process, such as treatment of a knee fracture, the selected or created process is based on a process template, in this case a "knee fracture"-template. The selection of a new process would typically require additional input from the user, prompted by the user interface. The additional input may concern for instance a selection of the following: patient id, the type of process to be created, what activities to be performed in the process, the time for each activity to be performed and the responsible health care worker/user role for each activity to be performed. An interface relating to this exemplary embodiment is not shown in the figures.

The user may also be asked to specify further details on what information to display, for instance that activities to be performed by one or more selectable user roles (physician, operating physician, nurse etc.) are to be shown, or that one or more processes related to a specific patient are to be shown.

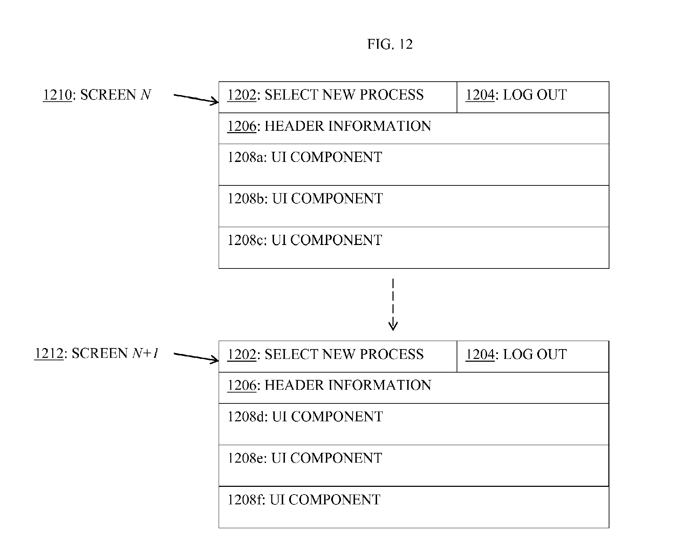

When the user has selected or created a process, a user interface with information relating to the selected or created process is generated and displayed on the display of the user terminal device. As shown in Fig. 12, the generated user interface may generally comprise UI components 1208 showing process description information such as activities to be performed, the time and the responsible health care worker for each activity to be performed and the activity category, for example "medication", "examination", "nutrition" or "operation". A UI component may also comprise an item that enables a user to interact with the user interface, for example to receive input information from the user that an activity has been performed or for manually modifying the information shown in the user interface. There may also be header information in a header 1206 showing for example the process id for the selected process or processes, patient id, the selected user role or user roles and time and date information. There may be selectable options such as "select new process" 1202 triggering return to the process selection interface 1104 and "logout" 1204 triggering return to the login interface 1102.

The generated interface is adapted to the properties of the user terminal device on which it is displayed, meaning that the displayed information may be organized and presented on subsequent screens, in Fig. 12 shown as "screen N" 1210 and "screen N+1" 1212, if the information to be displayed cannot fit onto one screen, according to the rules of the interface generation logic.

More specifically, the user interface components are dynamically organized, according to the rules of the interface generation logic, dependent on the size and/or resolution of the display of the user terminal device. The organization step comprises organizing the selected one or more user interface components on a current screen, the screen having the size of the display of the user terminal device. If the screen is full and there is still one or more user interface components not yet organized, the remaining user interface components are organized onto a second screen having the same size as the first screen, i.e. the size of the display of the user terminal device. If there is still one or more user interface components that have not been organized on the first or second screen, a third screen is used, and so on until all user interface components are organized on a screen. Thereafter the organized user interface components are displayed to the user on the display of the user terminal device 108, as one or more (subsequent) screens, the same number of screen have been used/created during the organization step.

A specific example where the user has selected to view the process "knee fracture" relating to "patient X", and further selected to view all activities to be performed by the designated physician, the generated user interface may be displayed in the following way:
Screen 1:

| Knee fracture, patient X | |
|---|---|
| Physician, Mars 10 2011 | |
| Medication | Continue home medication |
| Examination | ECG |
| | Order X-ray of the knee |

Screen 2:

| Knee fracture, patient X | |
|---|---|
| Physician, Mars 11 2011 | |
| Laboratory | Order complete blood count |

Another user interface generated for the same process but for the user role nurse may instead be displayed in the following way:
Screen 1:

| Knee fracture, patient X | |
|---|---|
| Nurse, Mars 10 2011 | |
| Nutrition | No solid food after 20:00 |

Screen 2:

| Knee fracture, patient X | |
|---|---|
| Nurse, Mars 11 2011 | |
| Examination | Monitor the recovery of the patient |

The screens shown above are exemplary embodiments, and the information content and layout may of course vary. For example, time information may be presented on many levels of details, such as hour, day, night/day shift, month, year or two weeks from process start time.

### Exemplary embodiments of the inventive method

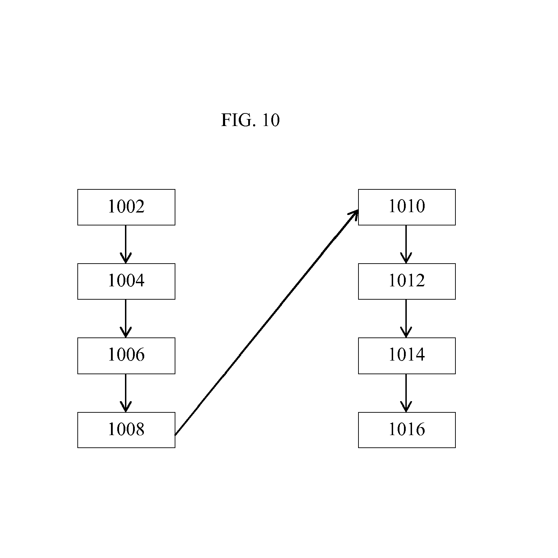

Fig. 10 is a block diagram that shows en exemplary embodiment of the present invention. The exemplary embodiment is explained below, also referring to the system of Fig. 1 and the block diagrams of Fig. 7A-9B.

In step 1002 a user logs in using input means of a user terminal device 108. In response to the login information entered into the user terminal device 108, the local controller 124 sends a command to the local processor 120 to formulate a request of retrieval of user role information based on the login information. The request is sent via the communications network 106 and received in the central server 104. The central controller 114 sends a command to the central processor 112 to retrieve user role information from the user role repository 306 of the central memory 110, and to send the retrieved information as a response to the user terminal device 108, via the communications network 106, whereby the user role information is received in the user terminal device 108 in step 1004 and stored as a local copy in the local memory 118.

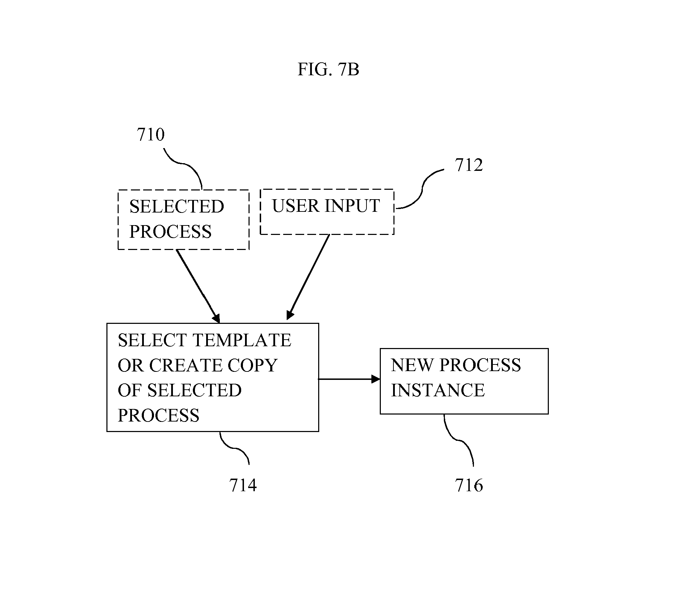

In step 1006 the user inputs a process selection. The process selection may indicate selection of an active process or creation of a new process, as described above in the chapter *User perspective.* A block diagram of the creation of a new process is also shown in Fig. 7B, where user input indicating that a new process is to be created, and possibly also information on a selected process 712, is used as a basis for creating the new process. If information on a selected process is input, this may be used to create a new process instance as a copy of the selected process. The information on a selected process may be included in the user input 712. The user input may further include case specific information, for instance a selection of the following: patient id, the type of process to be created, what activities to be performed in the process, the time for each activity to be performed and the responsible health care worker/user role for each activity to be performed. In response to the process selection entered into the user terminal device 108, the local controller 124 sends a command to the local processor 120 to formulate a request of retrieval of process information based on the process selection and, if an active process has been selected by the user, the process start time of the active process. The request is sent via the communications network 106 and received in the central server 104. The central controller 114 sends a command to the central processor 112 to retrieve process information from the process descriptions database 304 and process start time/process time 604 from the list of active processes 602 in the central memory 110, and to send the retrieved information as a response to the user terminal device 108. The retrieved information is sent via the communications network 106, whereby the selected process information is received in the user terminal device and stored as a local copy in the local memory 118.

A block diagram of the selection of a process is also shown in Fig. 7A, showing that the process description database 704 is filtered based on user selection input 708, in order to retrieve one or more selected processes. The user selection input may comprise a selection of the following: user role information; current time information; current process time; process information and process id. The process description database 704 that is filtered may be the centrally stored process descriptions database 304 or a locally stored copy 310 of the process descriptions database 304 or part of the process descriptions database 304.

In step 1008 the local controller 124 sends a command to the local processor 120 to retrieve the current time. The local processor 120 retrieves the current time for example through synchronization with the internal clock of the user terminal device 108 or from another unit of the system, where after the current time may be stored locally as current time 406 in the login information 402 in the local memory 406. The local processor 120 further calculates a current process time based on the current time and the process start time of the user selected or user created process.

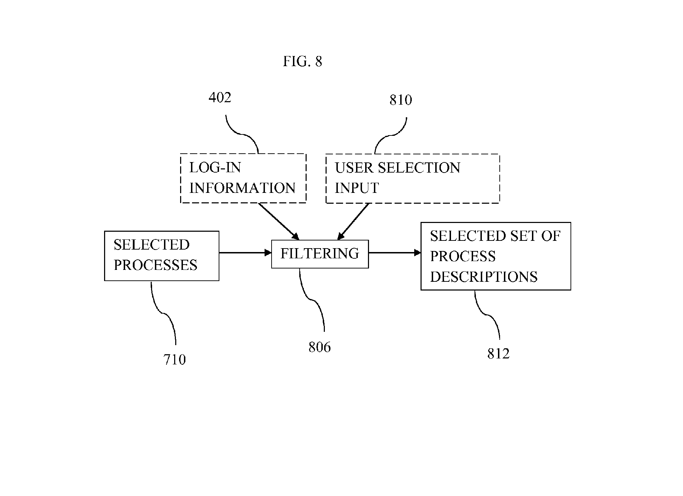

In step 1010 the local controller 124 sends a command to the local processor 120 to retrieve a set of process descriptions from the selected processes stored in the local memory 118. This step is also shown as a block diagram in Fig. 8. The local processor 120 retrieves a set of process descriptions through filtering 806 of the locally stored selected processes 710, based on the locally stored copy of the user role information in the login information 402 and possibly other user selection input 810 concerning what information to be displayed, in order to arrive at a selected set of process descriptions 812.

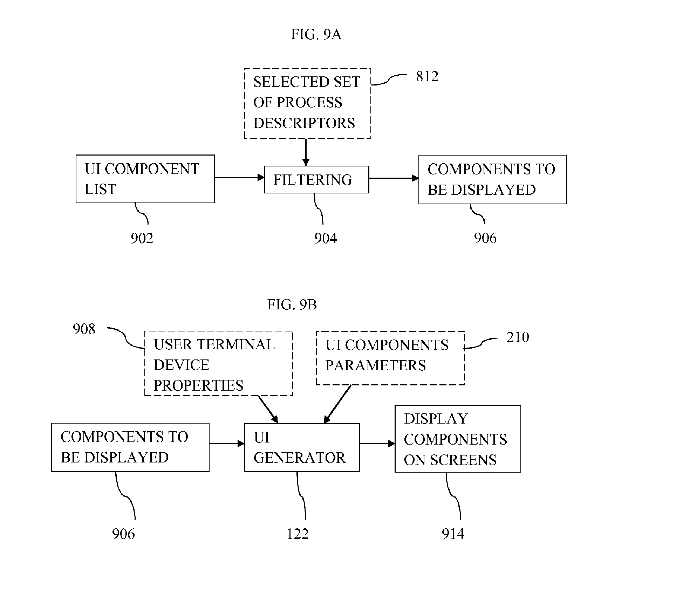

In step 1012 the local controller 124 sends a command to the local processor 120 to select one or more components to be displayed. This step is also shown in the block diagram in Fig. 9A. The local processor 120 selects one or more components to be displayed 912 through filtering 906 of a device specific UI component list 312 stored in the local memory 118 of the user terminal device 108, based on the selected set of process descriptions 812.

In step 1014 the local controller sends a command to the UI generator 122 to organize the components to be displayed 906. This step is also shown in the block diagram in Fig. 9B. The UI generator 122 dynamically organizes the components to be displayed 906 based on properties 908 of the user terminal device (for example size and/or resolution of the display) and parameters 210 of the UI components to be displayed (for example size), according to predetermined layout organization rules of the UI generation logic 212 comprised in the UI generator 122. The size of the user interface components is defined as the height and width and the user interface components, and the size of the display of the user terminal device is defined as the height and width of the display of user terminal device.

According to an exemplary embodiment, more than one possible organization of component is performed for one user terminal device, in order to take the orientation of the user terminal device into consideration. Typically, a user terminal device with more than one possible orientation has two orientations: "portrait" and "landscape". In this case, the UI components to be displayed are organization into two different layouts that are stored locally, to enable a fast change of layout if the orientation of the user terminal device is changed.

In step 1016 the organized components 912 are sent to the display of the user terminal device 108, where the organized components 912 are displayed as a dynamically generated interface to a user of the terminal device.

## Claims

1. A method for generating a user interface on a user terminal device (108) in a computerized support system (102) for supporting a process oriented health care organization, wherein:
a. the computerized support system (102) comprises a central server (104) and a plurality of user terminal devices (108) communicatively coupled by means of a data communications network (106);
b. a plurality of process descriptions comprising process related parameters are accessible via the central server (104);
c. at least one selectable process description associated with a specific user is displayed on the user interface;
**characterized in** the steps of:
d. storing a local copy of a selected set of process descriptions in the user terminal device (108);
e. generating, by means of interface generation logic implemented in the user terminal device, a user interface for displaying the selected set of process descriptions in at least one user interface component, comprising:
i. selecting, dependent on the selected process descriptions, the at least one user interface component to be displayed from a repository of user terminal specific user interface components stored in the user terminal device;
ii. dynamically organizing the user interface components to be displayed dependent on user terminal device property parameters, parameters of the user interface components to be displayed and predetermined layout organization rules comprised in the interface generation logic;
f. displaying the generated user interface on a display of the user terminal device.

2. The method of claim 1, wherein the at least one selectable process description associated with a specific user is selected dependent on information comprising a selection of the following:
a. user role information;
b. current time information;
c. current process time; and
d. process id.

3. The method of claim 1, wherein the process descriptions are cross-functional and include items such as one or more activities, time for the one or more activities to be performed and function or work-role of a user performing the activity.

4. The method of claim 2, wherein the user role information is retrieved from a repository of pre-stored user roles in the central memory of the central server in response to an input by a user using input means (124) of a user terminal device.

5. The method of claim 2, wherein the current time information is retrieved through synchronization with an internal clock of the user terminal device.

6. The method of claim 2, wherein the process information is retrieved from a repository of pre-stored process descriptions in the central memory of the central server in response to an input by a user using input means (124) of a user terminal device.

7. The method of claim 2, wherein the process information comprises a new process created by the user.

8. The method of claim 6, wherein a new process is created by creating a new copy of a selected process, storing the process start time and linking the new process to the active domain specific case, in healthcare a patient and his/her medical condition being treated.

9. The method of claim 1, wherein the user interface components are dynamically organized dependent on the size and/or resolution of the display of the user terminal device.

10. The method of claim 1, wherein the organization step further comprises:
a. organizing the selected one or more user interface components on a current screen, the screen having the size of the display of the user terminal device;
b. if the screen is full, and there is still one or more user interface components not yet organized, proceeding onto a next screen, the next screen having the size of the display of the user terminal device; and
c. iterating steps a-b until all user interface components are organized.

11. The method of claim 9, wherein the displaying step comprises displaying the organized user interface components on subsequent screens, if more than one screen is used during the organization step.

12. The method of claim 1, wherein the orientation of the user terminal device is taken into consideration.

13. The method of the preceding claim, wherein the UI components to be displayed are organization into more than one different layouts that are stored locally, to enable a fast change of layout if the orientation of the user terminal device is changed.

14. The method of any of the proceeding claims, wherein the size of the user interface components is defined as the height and width and the user interface components, and further wherein the size of the display of the user terminal device is defined as the height and width of the display of user terminal device.

15. A computer program product for generating a user interface on a user terminal device (108) in a computerized support system (102) for supporting a process oriented health care organization, the computer program product comprising computer program code portions adapted to control a data processing system to perform the steps of:
a. storing a local copy of a selected set of process descriptions in the user terminal device (108);
b. generating, by means of interface generation logic implemented in the user terminal device, a user interface for displaying the selected set of process descriptions in at least one user interface component, comprising:
i. selecting, dependent on the selected process descriptions, the at least one user interface component to be displayed from a repository of user terminal specific user interface components stored in the user terminal device;
ii. dynamically organizing the user interface components to be displayed dependent on user terminal device property parameters and predetermined layout organization rules comprised in the interface generation logic;
c. displaying the generated user interface on a display of the user terminal device.

16. The computer program product of the preceding claim, further comprising computer program code portions adapted to control a data processing system to perform the steps of any of claims 2-14.

17. A system for generating a user interface on a user terminal device (108) in a computerized support system (102) for supporting a process oriented health care organization, the system comprising:
a. a central server (104);
b. a plurality of user terminal devices (108), each user terminal device comprising output functionality (126) in the form of a user terminal display;
c. a data communications network (106) communicatively coupling the central server (104) and the plurality of user terminal devices (108);
d. a repository of process descriptions comprising process related parameters, the repository of process descriptions being made available via the central server (104);
e. selection means for selecting at least one process description from the repository of process descriptions, wherein the at least one process description is associated with a user role;
**characterized in that** the user terminal further comprises:
f. storage means adapted to store a local copy of a selected set of at least one process description, stored in a local memory (118) of the user terminal device (108);
g. a repository of user terminal specific user interface components, stored in the local memory (118) of the user terminal device (108);
h. interface generation means for generating a user interface that displays the selected set of process descriptions in at least one user interface component, the interface generation means comprising:
i. selection means for selecting, dependent on the selected process descriptions, the at least one user interface component to be displayed from the repository of user terminal specific user interface components;
ii. organizing means for dynamically organizing the user interface components to be displayed, dependent on user terminal device property parameters and predetermined layout organization rules;
i. displaying means for displaying the generated user interface on the display of the user terminal device.

18. The system of the preceding claims further comprising means adapted for realizing the steps of any of claims 2-14.
